# EUROPEAN PATENT APPLICATION

(11) **EP 1 043 147 A1**
(43) Date of publication of application: **11.10.2000**
(21) Application number: 00107115.8
(22) Date of filing: 07.04.2000
(51) Int. Cl.: B29D 9/00, B32B 27/08, B32B 27/20, B32B 31/20

(54) **Lamination of two layers to form solid surface laminate**

(30) Priority: 07.04.1999 US 285881
(71) Applicant: Premark RWP Holdings, Inc., Wilmington, Delaware 19801 (US)
(72) Inventor: Ingrim, Michael E., Belton, Texas 76513 (US); Marshall, Donald M., Temple, Texas 76504 (US); Rabroker, Beth A., Lott, Texas 76656 (US)
(74) Representative: Frohwitter, Bernhard, Dipl.-Ing.

(57) **Abstract**

A method for manufacturing solid surface laminates is disclosed. The method is performed by providing a solid surface material layer, providing an opaque layer, layering the solid surface material layer and the opaque layer, and applying pressure to the solid surface material layer and the opaque layer to bond the solid surface material layer to the opaque layer and form a solid surface laminate. A solid surface laminate manufactured in accordance with the method described above is also disclosed.

## Description

The invention relates to a method for manufacturing solid surface laminates, and a solid surface laminate produced thereby. More particularly, the invention relates to a method for laminating a solid surface material layer and an opaque layer to form a solid surface laminate.

Solid surface materials have found wide use as replacements for resin impregnated decorative laminates and natural materials. Solid surface materials are commonly manufactured with a uniform composition throughout and offer many advantages not found in other materials. For example, solid surface materials are generally scratch and crack resistance, tough and renewable.

Solid surface materials may also be fabricated without the resulting seams found in both resin impregnated decorative laminates and natural materials. Where distinct solid surface materials meet, the seam is generally filled with matching solid surface material and the surrounding area is polished to remove any indication that distinct solid surface materials meet at the area in question.

A similar technique is employed where a gouge is found in the solid surface material. Specifically, the gouge is filled with matching solid surface material and the surrounding area is polished to remove any indication that the solid surface material has been repaired at the area in question.

While solid surface materials offer many advantages, these materials are very expensive. The expense is generally associated with the cost of manufacturing the solid surface material itself and the difficulties associated with fabricating countertops, tabletops and other objects manufactured from the solid surface materials.

Attempts have been made to reduce the expense of using solid surface materials. For example, Wilsonart International, Inc. has developed solid surface laminates in which a solid surface material is bonded to a substrate. By manufacturing a thinner solid surface material (0.060" as opposed to standard ½") and bonding the solid surface material to a substrate, they have been able to reduce the cost of fabricating objects from solid surface materials. Specifically, solid surface laminates provide a reduction in the cost of materials as well as a reduction in the fabrication costs commonly associated with solid surface materials, without sacrificing the many benefits offered by solid surface materials.

The solid surface laminates developed by Wilsonart International are generally composed of a solid surface decorative layer bonded to an opaque layer. The solid surface laminate is then bonded to an appropriate substrate for subsequent fabrication. The necessity of the opaque layer is dictated by the translucency of the solid surface materials commonly used in the manufacture of solid surface laminates. Specifically, most solid surface materials do not have an adequate opacity to prevent bleeding of the substrate positioned beneath the decorative laminate.

In addition, the opaque layer improves the ability to handle the laminate sheet without breakage occurring. Specifically, the glass fiber in the opaque layer increase the strength of the laminate sheet.

The solid surface thermoplastic materials used in the manufacture of solid surface laminates, are extrudable and ideally suited as countertop base materials exhibiting good scratch resistance, hardness, renewability and machinability. The term "machinability" is used to denote the ability of the thermoplastic acrylic sheet to be machined with conventional high pressure decorative laminate equipment. The term "renewability" is used to denote the ability to remove scratches and other marks on the surface of the thermoplastic acrylic sheet by sanding, preferably wet sanding, or other abrasive means to result in a surface that contains no readily visible marks.

The opaque layer employed in the solid surface laminate is designed with an opacity sufficient to prevent visible bleed through of the visual characteristics of the substrate to which the decorative layer is bound.

These solid surface laminates are currently manufactured by coextrusion of the solid surface material and the opaque layer. Given the preparation required to set up for a single run, the opaque layer and the solid surface material layer are generally similar colors, because they generally produce the most popular colors and styles. Where different colors are desired, the cost of setting up the coextrusion run is prohibitively expensive, and, therefore, is not a viable option.

While solid surface laminates present advantages over traditional solid surface materials, the development of solid surface laminates continues to move forward and improvements in the manufacture and fabrication of solid surface laminates continue to develop. The present invention represents an improvement in the manufacture of solid surface laminates.

It is, therefore, an object of the present invention to provide a method for manufacturing solid surface laminates. The method is performed by providing a solid surface material layer, providing an opaque layer, layering the solid surface material layer and the opaque layer, and applying pressure to the solid surface material layer and the opaque layer to bond the solid surface material layer to the opaque layer and form a solid surface laminate.

It is also an object of the present invention to provide a solid surface laminate manufactured in accordance with the method described above.

Other objects and advantages of the present invention will become apparent from the following detailed description when viewed in conjunction with the accompanying drawings, which set forth certain embodiments of the invention.

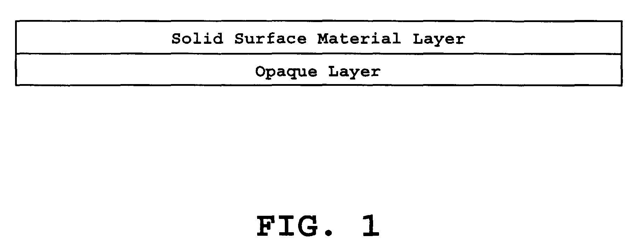

Figure 1 is a schematic of a solid surface laminate in accordance with the present invention.

The detailed embodiments of the present invention are disclosed herein. It should be understood, however, that the disclosed embodiments are merely exemplary of the invention, which may be embodied in various forms. Therefore, the details disclosed herein are not to be interpreted as limited, but merely as the basis for the claims and as a basis for teaching one skilled in the art how to make and/or use the invention.

With reference to Figure 1, a solid surface laminate manufactured in accordance with the present method is disclosed. The solid surface laminate includes a decorative surface layer composed of a solid surface material layer and an opaque layer. In accordance with the preferred embodiment of the present invention the solid surface material layer is approximately 0.050" (0.127 cm) and the opaque layer is approximately 0.010" (0.0254 cm). While specific dimensions are disclosed in accordance with preferred embodiment of the present invention, the dimensions may be varied without departing from the spirit of the present invention.

As discussed above, it has been found that the translucency of solid surfacing materials made in the thickness range discussed above necessitates the addition of an opaque layer to improve the aesthetic appearance of the resulting solid surface laminate product. Specifically, the translucency of the solid surface material layer may result in the surface characteristics of the substrate bleeding, or showing, through the solid surface material layer. As such, various combinations of solid surface materials and opaque layer materials may be employed in accordance with the present invention to achieve desired results.

One preferred class of plastic-based laminates for use in the manufacture of the solid surface material employed in accordance with the present invention are thermoplastic acrylic sheets composed of a thermoplastic acrylic polymer, fillers, and an impact modifier. The target physical properties include a Barcol hardness of the sheet of 40 or greater, preferably 50 or greater, more preferably 55 or greater, a melt flow index of at least 1.5, translucency, handleability, reduced thickness and good look, feel and durability. These types of polyacrylic materials are widely commercially available and provide a perception of depth, a simulated marble or granite appearance and provide renewability of the material surface.

As discussed in the background of the invention, these thermoplastic laminates are commonly extruded or batch processed. They are ideally suited as countertop base materials exhibiting good scratch resistance, hardness, renewability and machinability.

In accordance with the preferred embodiment of the present invention, the solid surface material is composed of thermoplastic acrylic sheet. In fact, the present invention provides a thermoplastic acrylic sheet composition comprising a thermoplastic acrylic polymer having dispersed therein a filler and an impact modifier, and optionally a pigment and/or one or more conventional additives, wherein the filler has an aspect ratio of up to 25:1 and preferably a Mohs hardness value of at least 2.5.

In the present thermoplastic acrylic sheet composition, the filler is present in an amount sufficient to provide a Barcol hardness of the sheet of 40 or greater, preferably 50 or greater, more preferably 55 or greater.

The thickness of the thermoplastic acrylic sheet of the present invention is not particularly limited. The thickness of the thermoplastic acrylic sheet is preferably from 10 to 70 mil (0.025 cm to 0.178 cm), more preferably from 25 to 60 mil (0.064 cm to 0.152 cm), most preferably 50 mil (0.127 cm). If the final product is desired to possess the appearance of conventional solid surfacing materials, the thermoplastic acrylic sheet should have a thickness of 30 mil (0.076 cm) or greater, in order to provide the necessary depth of visual field in the layer.

The thermoplastic acrylic sheet of the present invention can be formed by any method that provides the requisite thickness. Preferably, the present thermoplastic acrylic sheet is formed by casting or extrusion, most preferably by extrusion. When the thermoplastic acrylic sheet is formed by extrusion, a filler, an impact modifier, and optionally a pigment and/or one or more conventional additives, are dispersed into the thermoplastic acrylic polymer preferably using a melt blender conventional mixer or by extrusion, using a twin or single screw extruder and, subsequently, pelletized to form a masterbatch containing the thermoplastic acrylic polymer having dispersed therein the additional ingredients. The masterbatch is then extruded in a single or twin screw extruder equipped with a sheet forming die to form the thermoplastic acrylic sheet of the present invention. Those skilled in the art will readily appreciate that the acrylic sheet may alternately be manufactured by direct extrusion; that is, compounding of the thermoplastic acrylic polymer and sheet extrusion occur in a single step.

The various components of the thermoplastic acrylic sheets will not be discussed in detail.

The thermoplastic acrylic polymer is comprised by at least 90 wt.%, preferably at least 98 wt.%, most preferably 100 wt %, based on the total thermoplastic acrylic polymer of a homo or copolymer of methyl methacrylate. Suitable copolymerizable monoethylenically unsaturated monomers may be represented by the general formula (I):

CH₂=C(R¹)COOR² (I)

where R¹ is a hydrogen or a C₁-C₃ alkyl group, and R² is a C₁-C₂₀ alkyl group, phenyl, benzyl, hydroxy-(C₁-C₄)-alkyl, alkoxy-(C₁-C₄) alkyl, cyclopentyl, cyclohexyl, and combinations of these monomers thereof. Combinations of monomers where R¹ is hydrogen and monomers where R² is an alkyl group are used to modify the glass transition temperature (Tg) of the polymer. Preferred examples of comonomers are, but not limited to, methyl(meth)acrylate, ethyl(meth)acrylate, propyl (meth)acrylate, isopropyl (meth)acrylate, butyl (meth)acrylate, isobutyl (meth)acrylate, hexyl (meth)acrylate, isooctyl (meth)acrylate, isodecil (meth)acrylate, laurel (meth)acrylate, stearyl (meth)acrylate, phenoxyethyl (meth)acrylate, methoxyethyl (meth)acrylate, benzyl (meth)acrylate, epoxyethyl (meth)acrylate, 2-ethylhexyl (meth)acrylate, cyclopentyl (meth)acrylate and isobornyl (meth)acrylate, as well as combinations of those monomers thereof. The term "alkyl" is used to denote straight chain or branched alkyl groups. A combination of these monomers may be used in order to achieve an appropriate Tg or other properties for the thermoplastic acrylic polymer. The term "(meth)acrylate" is used to denote an acrylate or a methacrylate monomer.

Additional suitable copolymerizable monoethylenically unsaturated monomers include styrenic monomer. Styrenic monomer denotes styrene, or a substituted styrene such as C₁-C₆ alkyl ring-substituted styrene, C₁-C₃ alkyl α-substituted styrene or a combination of ring and α-alkyl substituted styrene. Preferred styrenic copolymerizable monomers include styrene, p-methylstyrene, o-methylstyrene, p-butylstyrene, o-methylstyrene and combinations thereof.

A preferred molecular weight for the acrylic thermoplastic polymer is in the range of 100,000 to 220,000, preferably 120,000, to 180,000, and most preferably 130,000 to a 150,000 number average molecular weight (Mn). In the present invention it is more advantageous to describe the acrylic polymer with respect to its melt flow index (MFI), since the MFI of a polymer takes into consideration not only its molecular weight but also its polymer chain structure with respect to linearity, branching, crosslinking, etc. The acrylic polymer of the present invention has a MFI of at least 1.5, preferably from 1.5 to 30, more preferably from 1.5 to 3.8, still more preferably from 3.0 to 3.5, most preferably around 3.4.

It is preferred that the thermoplastic acrylic polymer has a Tg between 90°C and 130°C (194°F to 266°F), more preferably between 95°C and 110°C (203°F to 230°F).

The thermoplastic acrylic polymer is preferably selected from poly(meth)acrylates sold under the tradename ACRYLITE by Cyro.

The filler of the present invention is required to have an aspect ratio greater than 1 and up to 25:1. The filler provides a range of properties to the resulting acrylic sheet, including, but not limited to, light scattering effects, color effects and physical property improvements, particularly in the area of hardness of the sheet. When a filler is used that has round particles (i.e. an aspect ratio of about 1), the resulting light scattering off of the particles in the sheet interferes with the desired translucency in the preferred embodiments of the present invention. However, in those embodiments where translucency is not desired, a filler having an aspect ratio of close to 1 could be used.

The filler is used in an amount sufficient to provide the acrylic sheet with the requisite Barcol hardness. Preferably, the filler is present in an amount of 20 to 60 wt.% based on the total composition, more preferably in an amount of about 35 to about 55 wt.%, most preferably in an amount of from 40 to 50 wt%. When the filler is present below 20 wt%, the resulting acrylic sheet has insufficient hardness and insufficient machinability. When the filler is present above about 60 wt%, the resulting acrylic sheet tends to become brittle and friable.

In a preferred embodiment, it is important that the filler have an aspect ratio significantly different from 1 and up to 25:1, preferably from 3:1 to 20:1, more preferably from 4:1 to 10:1.

In one preferred embodiment, a 1:1 mixture of two fillers, one of low aspect ratio of about 5:1 and one of high aspect ratio of about 20:1, are used. During the extrusion process, this mixture of aspect ratios results in a final extruded product with a filler having an average aspect ratio of about 5:1.

The filler of the present invention preferably has a Mohs hardness of at least 2.5, more preferably from 2.5 to 7, still more preferably from 4 to 5, most preferably about 4.5.

Suitable fillers include, but are not limited to, wollastonite, mica, CaCO₃, and silica, with wollastonite being most preferred from a standpoint of aspect ratios available and range of colors available from different sources. The use of different colors of filler in the present composition can be employed to provide color matching between the polymer and filler, between the filler and one or more pigments and between different batches of acrylic sheet. Wollastonite is also preferred because its refractive index is close to that of the acrylic polymers, thus providing good optical properties and effects in the final product.

Preferred wollastonites include Woll 266 (from American Minerals), KCL-12F (from Nyco), KCL-15F (from Nyco), NYAD 325 (from Nyco) and NYAD 325 GE 90 (from Nyco). Depending on the properties desired in the final sheet prepared, the wollastonites noted above can be used singly or in combinations, with or without surface treatment, such as silane surface treatment, with the differences in aspect ratios of the products causing various changes in the physical properties of the resulting sheets. For example, the use of 20-25% of Woll 266 shows a significant increase in ultimate tensile stress, ultimate tensile strain, tensile toughness, ultimate flexural stress, ultimate flexural strain and flexural toughness of the prepared sheet compared to the use of 40% NYAD 325.

Preferred modifiers are those having a core-shell particle structure, where the core is comprised of a rubbery polymeric material having a glass transition temperature (Tg) of below -10°C (14°F) and a thermoplastic second phase having a Tg of at least 50°C (122°F), the thermoplastic second phase being distributed and attached to the surface of the rubbery core. These types of modifiers are conventionally used in polyvinyl chloride (PVC) polymer compositions. Preferred materials for the core of the impact modifier particles in accordance with the present invention comprise a homopolymer or copolymer of butyl acrylate, ethyl acrylate, ethylhexyl acrylate, butadiene or dimethyl siloxane, and mixtures thereof. Preferred material for the thermoplastic shell comprises substantially poly(methyl methacrylate). Most preferred impact modifiers are those core-shell modifiers having a poly(dimethyl siloxane) core and a poly(methyl methacrylate) shell.

Conventionally, the use of impact modifiers in acrylic polymers is known to provide impact resistance as measured by energy to break, load to break and impact velocity at failure. Toughness is reflective of the overall mechanical performance of the polymer composition up to catastrophic failure and correllates to impact failure. The toughness is determined by the measurement of the integrated area under the stress/strain curve for the particular polymer composition. However, when conventional impact modifiers are used in acrylic polymers, the typical result is that while the impact resistance is improved, one sees a dramatic downshift in the deflection temperature under load (DTUL). However, the present invention provides for the first time the use of the above noted core-shell type impact modifiers in an acrylic polymer. The resulting acrylic polymer has improved impact resistance, but there is little or no change in the DTUL, even at high loadings of the impact modifiers.

Within the context of the present invention, the term "core-shell" is used to denote not only particles where the core is completely surrounded by a shell, but also to "structured multiphase composite" impact modifiers. The term "structured multi phase composite" is used to denote rubbery multi phase particles characterized in that they are comprised of a rubbery core having a lower glass transition temperature (Tg) and a thermoplastic second phase having a higher Tg, the thermoplastic second phase being distributed and attached to the surface of the rubbery core in the form of a discontinuous region of material. Structure multi phase composite are known having a discontinuous region (shell) in the form "spots", "patches", "multi-lobe", "peanut"-like, "acorn"-like, "raspberry"-like or any other form. Core-shell materials having the above structures have been disclosed in many publications over the past ten years, for example, in U.S. Patents 5,270,397, 5,306,777, 4,513,118 and 5, 447,989 and references therein. These references are incorporated herein by reference. The shell of the impact modifier particle provides compatibility of the impact modifier particles with the thermoplastic acrylic polymer while the core provides impact strength.

The impact modifier is present in the present acrylic sheet composition in an amount sufficient to maximize the impact resistance and toughness of the sheet, while minimizing the effect on the Barcol hardness. Increasing the impact modifier concentration results in (i), a decrease in the Barcol hardness, tensile modulus and stress at failure and, (ii), an increase in the strain at failure and toughness, when compared to the unmodified base layer. It is preferred that the impact modifier is present in an amount of from about 0.1 to 10 wt.% based on the amount of the thermoplastic acrylic polymer, preferably in an amount from about 1 to about 6 wt.%, most preferably in an amount of from about 2 to about 3 wt.%. When the impact modifier is present in an amount less than about 0.1 wt%, the resulting sheet has insufficient toughness and impact resistance, even though the Barcol hardness is barely affected. When the impact modifier is present in amounts of greater than about 10 wt% of the composition, the acrylic sheet loses Barcol hardness, with little significant additional improvement in toughness.

In combination with the loading amount, another important factor in selecting the impact modifier is the particle size. It is preferred that the particle size of the impact modifier particles are in the range of from 0.1 to 1 micron, preferably in the range between 0.2 and 0.6 microns.

Suitable, commercially available core-shell impact modifiers include, but are not limited to, FM10 and FM20 available from Kaneka Texas Corporation; DURASTRENGTH 200 and METABLEND S-2001 available from Elf Atochem; KM334 available from Rohm and Haas and BLENDEX 980 available from General Electric.

Additional suitable impact modifiers include thermoplastic elastomers (TPE) including thermoplastic urethane elastomers (TPU), such as DESMOPAN available from Bayer; styrene-butadiene TPE such as available from Shell under the trade name KRATON; styrene polyolefin TPE such as available from Shell under the trade name KRATON G or ELEXAR. TPE impact modifiers may be used alone or in combination; combinations of TPE impact modifiers with core-shell modifiers are also possible.

Either organic or inorganic pigments or both can be used in the present invention. Suitable pigments include, but are not limited to, inorganic pigments such as TiO₂, basic carbonate white lead, basic sulfate white lead, basic silicate white lead, dibasic lead phosphite, leaded zinc oxide, antimony oxide, or zinc sulfide, and organic pigments such as benzimidazolones, phthalocyanines, quinacridones, dioxazines, isoindolinones, disazos, pyrazalones, diarylides and dianisidines, with the inorganic pigments being preferred and TiO₂ being most preferred.

The thermoplastic acrylic sheet of the present invention can be either translucent or opaque. When the acrylic sheet is translucent it is preferably either combined with a suitable opaque cap layer as described below or is used in combination with an opaque adhesive in order to bond the acrylic sheet to the surface to be covered. If the opaque adhesive or opaque cap layer are not used, it is important to be careful to avoid uneven coloring of the surface to be covered due to exposure of the surface through the translucent acrylic sheet. When used alone the acrylic sheet can also be opaque. In that embodiment, the pigment is present in an amount sufficient to block >90% of light transmission through the acrylic sheet, thus rendering the sheet effectively opaque.

It is most preferred that the acrylic sheet be translucent. The translucency and opacity can be determined readily by those of skill in the art in accordance with the procedures set forth in U.S. Patent 4,085,246 for measurement of optical density, the relevant portions of which are hereby incorporated by reference.

Additional additives include, but are not limited to, a fire retardant agent such as a fire retardant polymer (e.g. polyvinyl chloride, polyvinylidene chloride), a fire retardant monomer (e.g. bis-(b-chloroethyl) vinylphosphate) and an inorganic chemical such as zinc phosphate; a processing aid; a stabilizer; an antioxidant; an antimicrobial; a release agent; a dye; and a particulate material for decorative effect.

Suitable such additives are commercially available; they include, but are not limited to, fire retardants under the trade names ANTIBLAZE, available from Albright Wilson; FR fire retardant available from Amerbrom; Antimony Trioxide under the trade names AZ 12, AZ 14, AZ 15 and TruTint, available from Anzon America; SAYTEX flame retardant available from Ethyl Corporation; PYRO-CHEK flame retardants, available from Ferro; SAN-70/30, EVA-80/20, THERMOGUARD 212, THERMOGUARD 213, THERMOGUARD 215, THERMOGUARD 240, available from M&T Chemicals, FYREBLOC ANTIMONY OXIDE H, FYREBLOC ANTIMONY OXIDE L, FYREBLOC ANTIMONY OXIDE MH, FYREBLOC S GRADES, available from McGean-Rohco; colloidal antimony oxide flame retardant under the trade names A1510LP, A1530, A1550, AP50, APE1545, APVC45, A1582, A-1540N, N24, ADP480, ADP494, available from Nyacol Product.

Suitable particulate materials include, but are not limited to, those commercially available; including but not limited to translucent and transparent particles which are natural or synthetic minerals or materials such as agate, alabaster, albite, calcite, chalcedone, chert, feldspar, flint quartz, glass, malachite, marble, mica, obsidian, opal, rock gypsum, sand, silica, travertine, and moderately filled or unfilled, pigmented or dyed, insoluble or crosslinked chips of polymers, such as ABS resins cellulose esters, cellulose ethers, epoxy resins, polyethylene, melamine resins, phenolic resins, polyacetals, polyacrylics, polydienes, polyesters, polystyrenes, urea/formaldehyde resins, polyureas, polyurethanes, polyvinyl chloride and the like.

Suitable processing aids include, but are not limited to, those under the trade names LUBRICIN, PARACIN CALCIUM RICINOLEATE, available from Caschem; METABLEN P series, available from M&T Chemicals; ACRYLOID K series, such as K-120N, K-120N-D, K-125, K-147, K-147, K-175, KM-318F, KM-323B, KM-330, KM-334, KM-608A, KM-611, KM-641, KM-653, KF-710, as well as those under the trade name PARALOID BTA series, available from Rohm and Haas.

Suitable stabilizers include, but are not limited to, ultraviolet (UV) stabilizers such as those commercially available, hindered amine or benzophenone classes, under the trade name CYASORB UV series, available from American Cyanamid; heat stabilizers under the trade name CYASTAB series, lead carbonate, lead phosphate or lead phthalate salts, available from American Cyanamid; those under the trade name MARK VINYL STABILIZERS series available from Argus Chemical.

Suitable antimicrobials (bactericides/fungicides) include, but are not limited to, MICRO-CHEK antimicrobial agents, available from Ferro; INTERCIDE antimicrobial agents, available from Interstab Chemical; THOR PMDDS, PMA 100 or THORCAT PMA6/DPG antimicrobial agents from Thor Chemicals; and VANCIDE bactericide/fungicides from R. T. Vanderbilt.

Suitable antioxidants include, but are not limited to, those under the trade name CYANOX series available from Amarican Cyanamid; HOSTANOX series available from American Hoechst; ULTRANOX series available from Borg-Warner; IRGANOX series available from Ciba-Geigy; all of which are hindered phenols.

Suitable release agents include, but are not limited to, those under the trade name MOLD WIZ series available from Axel Plastics; CENTROPHIL, available from Central Soya; MOLGARD, PLASTILEASE, BULK SILICONE, available from RAM; the above are inorganic wax or silicone compositions.

Suitable dyes include, but are not limited to, azo dyes, diazo dyes, pyrazolone dyes, quinoline dyes, quinophthalone dyes, anthraquinone dyes and nigrosine dyes.

The thermoplastic acrylic sheet of the present invention may also contain, if desired, filled crystalline thermoplastic resin chips such as those described in U.S. Patent 5,457,152, the relevant portions of which are hereby incorporated by reference.

As to the opaque layer, it is designed to inhibit or prevent optical bleeding of the surface characteristics of the substrate through the acrylic-based laminates. The opaque layer is generally composed of a thermoplastic resin having dispersed therein a filler, an opacity agent and fiber, wherein the composition is capable of substantially blocking the visibility of a substrate when interposed between a solid surface material layer and the substrate. With this in mind, the opaque layer generally has a thickness of approximately 2 to 20 mils, and more preferably, a thickness of approximately 10 mils (0.025 cm). However, and as those skilled in the art will readily appreciate, the thickness of the opaque layer may be varied to suit specific needs without departing from the spirit of the present invention. In accordance with the preferred embodiment of the present invention, the preferred opaque layer is disclosed in commonly owned U.S. Patent Application Serial Number 09/172,951, entitled "Extruded, Unbalanced Solid Surface Composites and Method for Making or Using Same", filed on October 14, 1998. This application is incorporated herein by reference. As discussed in the '951 application, the opaque layer is preferably extruded into sheets and stored for later use. Similarly, the opaque layer disclosed in commonly owned U.S. Patent Application Serial Number 08/899,118, entitled "Thermoplastic Acrylic Sheet Compositions And Their Use As Substitutes For High Pressure Decorative Laminate", filed on July 23, 1997, which is incorporated herein by reference, as well as other known opaque layers, may be used without departing from the spirit of the present invention.

As discussed above, the solid surface material layer may either be extruded or batch processed, and the opaque layer is preferably extruded. While specific techniques for the manufacture of the solid surface material layer and the opaque layer are disclosed in accordance with the preferred embodiment of the present invention, other manufacturing techniques may be employed in providing the solid surface material layer and the opaque layer without departing from the spirit of the present invention.

Once appropriate quantities of the solid surface material layer and the opaque layer are produced and available for further processing, the solid surface laminate may be formed. In accordance with a first embodiment of the present invention, the solid surface material layer and the opaque layer are formed in a batch wise method. Specifically, the solid surface material layer and the opaque layer are first laid upon each other. The layers are then bound together under heat and pressure within a tradition laminate platen press.

In accordance with the preferred embodiment of the present invention, the layers are pressed at 750 p.s.i. for approximately 15 minutes over a temperature ranging from approximately 200°F to 305°F (93°C to 152°C). Once the bonding is completed, the completed laminate is permitted to cool for approximately 6 minutes before being removed from the press. As those skilled in the art will readily appreciate, the pressure, temperature and time periods discussed above may be varied to suit specific applications and specific materials without departing from the spirit of the present invention.

In accordance with an alternate embodiment of the present invention, the layers are continuously bound together by extruding one layer, adding sheets of a second layer and then passing the sheets through a 3 roll stack. Specifically, one of the layers must be in a molten state for the 3 roll stack to properly bond the layers and form the solid surface laminate in accordance with the present invention. Where the present embodiment is employed, the 3 roll stack may be placed in an extrusion line for the solid surface material layer such that the solid surface laminate is manufactured simultaneously with the solid surface material layer. In accordance with this embodiment, the opaque layer is previously extruded, or manufactured in another manner, and stored in roll form until needed.

By employing the batch processing methods discussed above with regard to either the first embodiment or the second embodiment the possible design offerings is substantially increased. Specifically, and as discussed above in the "Background of the Invention", where solid surface laminates are manufactured by coextrusion, the opaque layer and the solid surface material layer are commonly similar colors. Similar colors are used because they generally produce the most popular colors and styles. Where different colors are desired, the cost of setting up the coextrusion run is prohibitively expensive, and, therefore, is not a viable option.

In contrast, the present method permits limited batch processing of solid surface laminates at a reasonable cost. As such, where a specific solid surface material layer and opaque layer color combination is desired, the layers need only be layered, pressed and cut to size. An individual may, therefore, produce a limited run of solid surface laminate without incurring the huge expense of completely cleaning and reloading a coextrusion run.

These limited run solid surface laminates may be readily processed to generate unique designs not previously available at a reasonable cost. For example, the solid surface material layer may be cut away at specific locations to reveal the opaque layer, and thereby produce aesthetically pleasing accents.

While the preferred embodiments have been shown and described, it will be understood that there is no intent to limit the invention by such disclosure, but rather, is intended to cover all modifications and alternate constructions falling within the spirit and scope of the invention as defined in the appended claims.

## Claims

1. A method for manufacturing solid surface laminates, comprising the following steps:
providing a solid surface material layer;
providing an opaque layer;
layering the solid surface material layer and the opaque layer; and
applying pressure to the solid surface material layer and the opaque layer to bond the solid surface material layer to the opaque layer and form a solid surface laminate.

2. The method according to claim 1, wherein the solid surface material layer has a thickness of approximately 0.025 cm to 0.178 cm (10 to 70 mils).

3. The method according to claim 1, wherein the solid surface material layer has a thickness of approximately 0.127 cm (50 mils).

4. The method according to claim 1, 2 or 3, wherein the opaque layer has a thickness of approximately 0.005 cm to 0.05 (2 to 20 mils).

5. The method according to claim 1, 2 or 3, wherein the opaque layer has a thickness of approximately 0.025 cm (10 mils).

6. The method according to any of claims 1 to 5, wherein the step of applying pressure includes applying heat and pressure in a laminating press.

7. The method according to any of claims 1 to 6, wherein the step of applying pressure is conducted at approximately 51.71 bar (750 psi) for approximately 15 minutes over a temperature range of approximately 93°C to 152°C (200°F to 305°F).

8. The method according to any of claims 1 to 7, wherein the step of applying pressure is includes simultaneously passing the solid surface material layer and the opaque layer through a roll stack.

9. The method according to any of claims 1 to 8, wherein the solid surface material layer includes a thermoplastic acrylic polymer.

10. The method according to any of claims 1 to 9, wherein solid surface material layer includes fillers and an impact modifier.

11. The method according to any of claims 1 to 10, wherein the opaque layer is composed of a thermoplastic resin.

12. The method according to claim 12, wherein the thermoplastic resin includes a filler, an opacity agent and fiber dispersed therein.

13. The method according to any of claims 1 to 12, wherein the step of providing the solid surface material layer includes extruding the solid surface material layer.

14. The method according to any of claims 1 to 12, wherein the step of providing the solid surface material layer includes batch processing the solid surface material layer.

15. The method according to any of claims 1 to 14, wherein the step of providing the opaque layer includes extruding the opaque layer.

16. A solid surface laminate manufactured by the method comprising the following steps:
providing a solid surface material layer;
providing an opaque layer;
layering the solid surface material layer and the opaque layer; and
applying pressure to the solid surface material layer and the opaque layer to bond the solid surface material layer to the opaque layer and form a solid surface laminate.

17. The solid surface laminate according to claim 16, wherein the step of applying pressure includes applying heat and pressure in a laminating press.

18. The solid surface laminate according to claim 16, wherein the step of applying pressure includes simultaneously passing the solid surface material layer and the opaque layer through a roll stack.

19. The solid surface laminate according to claim 16, 17 or 18, wherein the solid surface material layer includes a thermoplastic acrylic polymer.

20. The solid surface laminate according to any of claims 16 to 19, wherein the opaque layer is composed of a thermoplastic resin.
